# EUROPEAN PATENT SPECIFICATION

(11) **EP 2 378 249 B1**
(45) Date of publication and mention of the grant of the patent: **05.09.2012**
(21) Application number: 10003997.3
(22) Date of filing: 15.04.2010
(51) Int. Cl.: G01C 21/34, G08G 1/0968

(54) **Navigation system for a vehicle and method of route searching**
Navigationssystem für ein Fahrzeug und Verfahren zur Routensuche
Système de navigation pour véhicule et procédé de recherche de route

(43) Date of publication of application: 19.10.2011
(73) Proprietor: Alpine Electronics, Inc., Tokyo (JP)
(72) Inventor: Schwemmer, Klaus, 70567 Stuttgart (DE); Galos, Andreas, 70567 Stuttgart (DE); Kueper, Thorsten, 70567 Stuttgart (DE)
(74) Representative: Klunker . Schmitt-Nilson . Hirsch

(56) References cited:
- WO-A1-2008/148606
- DE-A1-102007 019 244
- DE-A1-102008 021 087
- DE-A1-102008 033 297
- US-A1- 2006 129 315
- US-A1- 2010 076 675

## Description

### Background of the Invention

### Field of the Invention

The present invention is concerned with a navigation system which is adapted to be installed in a vehicle and includes a route processing unit adapted for calculating a route to a destination. Further, the invention is directed to a method of route searching in a navigation system.

### Description of the Related Art

A commonly known navigation system detects the position of a user for performing route guidance to a destination which the user has entered into the navigation system. For example, a navigation system detects the position of a vehicle when the navigation system is installed in a vehicle, wherein the current position of the vehicle is typically detected by using a navigation sensor, a receiver such as a GPS (Global Positioning System) receiver, and map data corresponding to an area surrounding the detected position. Generally, a navigation system may display a map image on a display screen and may display a mark indicating the current position of the vehicle. The navigation system can search for a route by means of a route processing unit which calculates a route from a start point to a destination. As the current position of the vehicle changes with the movement of the vehicle, the vehicle position mark is moved along the route on the display screen, or a map image adjacent to the vehicle is scrolled while the vehicle position mark persists at a predetermined point on the display screen.

A navigation system can also provide additional functionality, for example suggest bypass routes in case of a traffic jam on the previously calculated route. Further, pre-settings in a navigation system input by the user before calculating a route may cause the route processing unit to avoid any toll roads when calculating the route to a destination.

In recent times, particularly urban regions have taken measures to reduce air pollution within cities by restricting the access of vehicles into certain areas within the cities. For example, such restrictions may be established temporarily by means of temporary toll systems in which the driver of a vehicle is charged for entry into the city, e.g. during daytime.

In US 2006/0129315 A1 there is disclosed a navigation apparatus of a vehicle which includes storage means for storing information about the vehicle and a road area; and guide route calculating means for calculating a guide route on the basis of the information stored in the storage means. The navigation apparatus determines whether to avoid an entry of the vehicle into the road area on the basis of the information about the vehicle and the road area. Particularly, the storage means is a storage medium for storing entry permission data of permission for the vehicle to enter a time limit charging road area. Regarding the time limit charging road area, a vehicle is allowable to enter the time limit charging road area during a charging period when a charge of the time limit charging road area is preliminarily paid. The navigation apparatus determines whether to avoid the entry of the vehicle into the time limit charging road area arranged to permit the entry of the vehicle during a charging period after a charge for the period is paid, in accordance with the payment condition of the time limit charging road area.

Further, other restrictions have been made such as by establishing so-called "Low Emission Zones (LEZ)" for reducing air pollution in urban areas due to urban traffic, which typically are restricted road areas or zones in which only vehicles may enter which fulfil a certain emission standard. In establishing LEZs, there may also be several levels of emission standards, wherein the vehicles have to fulfil at least the lowest standard which is allowed for vehicles to enter the LEZ. In such situations, there may be the case that the driver of a vehicle either does not know where any LEZs are existing when driving to a destination and/or does not know whether it is allowed to enter a respective LEZ.

WO 2008-148606 A1 relates to a method for operating a navigation system for a motor vehicle in a road network, and to a navigation system. In the navigation system, an information about the geographical location of a zone (UZ) of the road network with an emissions class-dependent drive-through restriction and about the emissions class at least required there is stored. Thereafter, the information entered is considered in the destination guidance process, wherein destination guidance into or through the zone is avoided if the at least one emissions class of the motor vehicle is not sufficient. The information about the emissions class of the vehicle can be entered into the navigation system in various ways, for example entering this information manually or automatically from a motor control, or by wireless transmission from an RFID-transponder which may be integrated into a badge. In case that the emissions class of the vehicle is not sufficient for entering the zone (UZ) with emissions class-dependent drive-through restriction, the route guidance may lead the driver to a parking lot outside the zone for changing to public transport. The same procedure may be made in case the destination of the route is outside the zone (UZ), but the route to the destination crosses the zone.

### Summary of the invention

It would therefore be beneficial to provide a navigation system and a method of route searching in a navigation system which may assist the driver in finding an appropriate route to a destination taking account of any restricted road areas such as low emission zones.

According to the invention, there is provided a navigation system according to claim 1. Further, according to the invention, there is provided a method of route searching in a navigation system according to claim 12.

Particularly, there is provided a navigation system which is adapted to be installed in a vehicle and includes route guidance function, comprising a storing unit for storing vehicle emission information which is indicative of an emission characteristic of the vehicle, and a route processing unit adapted for calculating a route to a destination, wherein the route processing unit is adapted for processing the vehicle emission information and for calculating a route to a destination depending on the vehicle emission information.

Moreover, there is provided a method of route searching in a navigation system which is adapted to be installed in a vehicle, the method comprising the steps of storing vehicle emission information which is indicative of an emission characteristic of the vehicle, processing the vehicle emission information and calculating a route to a destination depending on the vehicle emission information.

According to the invention, there is provided a navigation system and a method of route searching in a navigation system which assist the driver in finding an appropriate route to a destination taking account of any restricted road areas such as low emission zones (LEZ). For example, in case that a specific badge (such as green, yellow or red badges used in Germany for indication of a respective emission characteristic of the vehicle) is required to enter a specific road area (which may be of the type of a LEZ or something similar), such type of badge may be stored as vehicle emission information in the storing unit and the navigation system may process this type of information for calculating a route taking account of any LEZ which may potentially restrict the access of the vehicle. If the vehicle is allowed to enter the LEZ, then the route may be unchanged. On the other hand, if the vehicle according to its badge may not enter the LEZ, the the navigation system may change the route in accordance with several options.

For example, the navigation system has a setting in the storing unit (optionally preset upon manufacturing the vehicle such as factory preset) for the vehicle having a LEZ badge (for example indicated by the type red/yellow/green used in Germany, but also applicable to other standards) or not. If the vehicle is expected to enter a LEZ and the badge is inappropriate or missing, the navigation system can give a warning, such as ,,You will enter a LEZ soon", and possible offers or alternatives could be given as follows:
- Continue the route (i.e., enter the zone), then select how to handle this zone in future ,
- Add a garage on the route to buy the necessary permission, e.g., badge (i.e., the driver can enter the zone by car). The navigation system may then remember the badge type when entering a LEZ in the future.
- Navigate the driver to a public transport station for entering the LEZ by public transport.

In this way, the system may avoid an annoying and often inaccurate default setting and provide appropriate support in urban restricted zone situations. The invention is also useful in navigation systems (so-called after-market systems), which are installed in older vehicles. Such vehicles have potentially higher emission rates, so that they are more likely to be not permitted in a LEZ as they not fulfil the required emission standard.

According to an embodiment of the invention, a map data storing unit is coupled to the route processing unit, the map data storing unit providing access permission information about at least one specific road area, the access permission information being indicative of a permission of a vehicle to enter the at least one specific road area depending on its emission characteristic. For example, any information regarding LEZs may be stored in the map data storing unit, so that in combination with the vehicle emission information stored in the storing unit the navigation system may decide whether the vehicle may enter a respective LEZ.

According to an embodiment of the invention, the route processing unit is adapted to process access permission information about a specific road area with the vehicle emission information for calculating the route to the destination, and if it is determined that the vehicle is not permitted to enter the specific road area, the route processing unit changes the route calculating process. For example, the above offers or alternatives may be presented to the user, or the route may be calculated to avoid the respective LEZ.

For instance, if it is determined that the vehicle is not permitted to enter the specific road area, the route processing unit is adapted to calculate a route to a destination which is outside the specific road area, or to calculate a route to a destination without using roads within the specific road area. According to an embodiment, the route processing unit is adapted to calculate a route to a destination which is a location for changing to public transport or taxi for entering the specific road area by public transport or taxi, or a location for acquiring a permission (e.g. badge) to enter the specific road area.

According to an embodiment of the invention, the vehicle emission information stored in the storing unit comprises information regarding an emission badge or an emission class assigned to the vehicle. For example, the vehicle emission information stored in the storing unit comprises information regarding one of different types of emission badges, the different types of emission badges being indicative of different levels of emission characteristics of vehicles.

For example, the emission badge may be one which indicates one of several emission levels, such as a green badge indicating level 4 (corresponding to emission class Euro 4 or higher), a yellow badge indicating level 3 (corresponding to emission class Euro 3), and a red badge indicating level 2 (corresponding to emission class Euro 2) used in Germany. In other words, the different colours of emission badges are indicative of different levels of emission characteristics of vehicles, wherein in the present example a higher level is indicative of a better vehicle emission characteristic. In another example, a vehicle emission class (which may also be known as vehicle emission standard or exhaust emission standard, such as commonly known Euro 1 to Euro 5) itself may be stored in the storing unit and used by the navigation system.

It shall be noted that the badges and colours thereof, and emission classes are mere examples of potential vehicle emission information and shall not be understood to restrict the invention in any way.

According to an embodiment of the invention, the route processing unit is coupled with a human machine interface for receiving user instructions for storing the vehicle emission information input by the user during a system setup. In this way, the vehicle emission information is set at one time during a system setup and may be kept during the lifetime of the vehicle.

In another embodiment, the route processing unit is coupled with a human machine interface for receiving user instructions for storing the vehicle emission information, wherein the route processing unit is adapted to request the user instructions in case the route processing unit has determined that the route enters a restricted road area which a vehicle may enter only depending on its vehicle emission information. In this way, an event-driven input of the vehicle emission information may be performed in case the route processing unit has determined that the route enters a restricted road area which a vehicle may enter only depending on its vehicle emission information. The route processing unit may then be adapted to no longer request user instructions for storing the vehicle emission information once the route processing unit has received the user instructions for storing the vehicle emission information.

According to an embodiment of the invention, the route processing unit is coupled with a human machine interface for receiving user instructions for selecting an option to bypass a restricted road area a vehicle may enter only depending on its vehicle emission information, for selecting an option to be guided to a location for changing to public transport or taxi for entering the restricted road area by public transport or taxi, or for selecting an option to be guided to a location for acquiring a permission to enter the restricted road area.

In an embodiment of the invention, a receiving unit may be provided which is coupled with the route processing unit for acquiring access permission information about at least one restricted road area from a server remote from the vehicle, the access permission information being indicative about criteria of permission of a vehicle to enter the at least one restricted road area depending on its vehicle emission information. In this way, the navigation system may be provided with current access permission information from a central server, for example if one city has decided to restrict a given LEZ even further, e.g. that from a given date only vehicles having an emission class Euro 4 or higher are permitted to enter the LEZ. Accordingly, the receiving unit may be coupled with the route processing unit for updating the route processing unit for route calculation depending on the acquired access permission information.

According to another embodiment, the storing unit is coupled with a receiving unit for acquiring vehicle emission information from a server remote from the vehicle, for example from a server of a vehicle manufacturer or vendor. Therefore, if the vehicle emission information is not available to the driver of if vehicle emission information needs to be updated or acquired (for example, if a new standard has been entered into force), such information may be provided from a manufacturer's server or any other server as appropriate.

Further advantageous features and embodiments of the invention are evident from the dependent claims.

### Brief Description of the Drawings

The invention will now be explained in view of the accompanying drawings for illustrating various embodiments of the invention, in which
- Fig. 1: is a schematic diagram of an exemplary vehicle navigation system according to an embodiment of the present invention,
- Fig. 2: depicts various kinds of exemplary information shown on a respective traffic sign indicating respective restricted road areas,
- Fig. 3: shows an exemplary implementation of a system setup for storing vehicle emission information in a navigation system
- Fig. 4: depicts an embodiment of a possible process in which the navigation system determines that the destination of a calculated route is within a restricted road area,
- Fig. 5: depicts an embodiment of another possible process in which the navigation system determines that the destination of a calculated route is within a restricted road area,
- Fig. 6: shows another exemplary implementation of a system setup for storing vehicle emission information in a navigation system,

- Fig. 7: depicts an embodiment of a possible process in which the navigation system determines that the calculated route goes through a restricted road area,
- Fig. 8: depicts an embodiment of another possible process in which the navigation system determines that the calculated route goes through a restricted road area.

### Description of embodiments

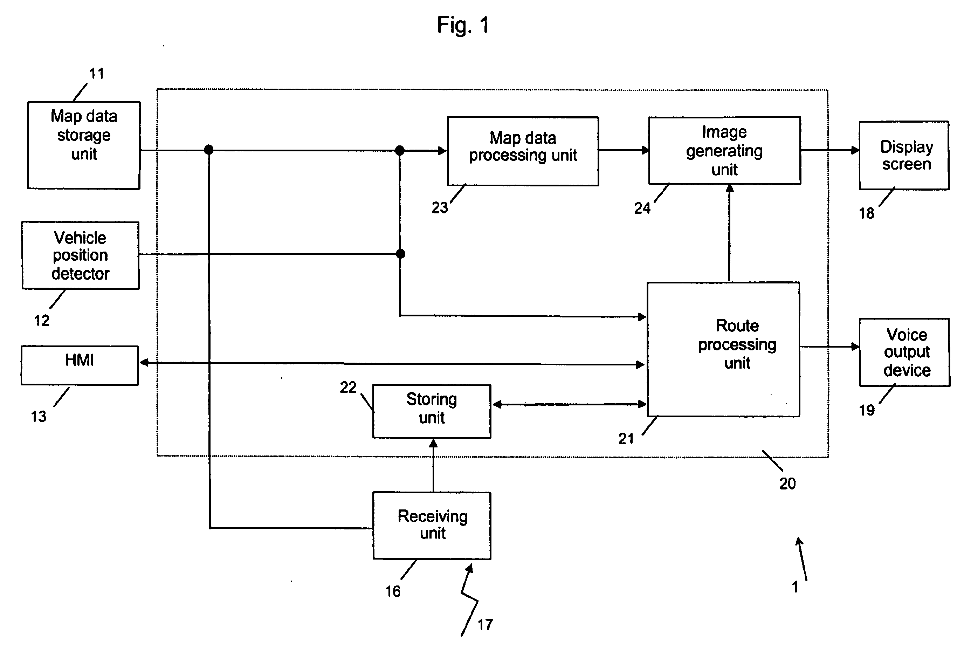

In Fig. 1, there is illustrated a general schematic diagram of an exemplary navigation system 1 according to an embodiment of the present invention. The navigation system may be installed in a vehicle when the vehicle is manufactured, i.e. is a pre-installed navigation system. According to another embodiment, the navigation system may also be a so-called after-market product which is installed in the vehicle at a later time after the vehicle has been manufactured.

The navigation system 1 includes a map data storage unit 11 such as a DVD device or hard disk drive for storing map information or map data for route processing and for displaying map data on a display screen. Reference numeral 20 denotes a navigation control device which comprises sub-units, as explained in more detail below, which generate a map image around the vehicle position using the map data, and perform route searching for finding a path for a route to be searched to a destination. From the map data storage unit 11 available map information or map data is loaded into a map data processing unit 23 which may include internal memory for storing corresponding map data. The map data processing unit 23 is connected with an image generating unit 24 for generating a map image on a display device 18, such as a display screen. The image generating unit 24 reads a set of relevant map data from the map data processing unit 23 and produces corresponding signals to be provided to the display screen 18. The image generating unit 24 may include a suitable circuitry for composing a map image including, for example, a vehicle position mark indicating the current vehicle position superimposed on the map image. To this end, a vehicle position detector 12 is also connected with the map data processing unit 23 which provides corresponding signals to the image generating unit 24. The image generating unit 24 also serves for superimposing a path of a searched route, or multiple paths of multiple searched routes, onto the map image, for example in a manner that the route path is highlighted in order for the user to easily distinguish the route from the remainder of the displayed map data.

The navigation control device 20 further includes a route processing unit 21, which is coupled with the image generating unit 24, for searching a route leading to a destination and for generating a guide route image on the basis of route data calculated in the route search process. Additionally or alternatively, the route processing unit 21 may also be connected with a voice output device 19 for providing voice guidance according to corresponding route data provided by the route processing unit 21. The map data processing unit 23 and the route processing unit 21 are both connected with the vehicle position detector 12, so that the map image displayed on the display screen 18 and the route guidance by means of the display screen 18 and/or by means of the voice output device 19 may be generated in accordance with the vehicle's motion and position.

The navigation system 1 according to the embodiment as shown in Fig. 1 also includes a storing unit 22 for storing vehicle emission information which is indicative of an emission characteristic of the vehicle. Vehicle emission information in the context of the present invention shall be understood as comprising any type of information which directly or indirectly indicates an emission characteristic of the vehicle. As an emission characteristic of the vehicle, any technical information shall be understood which directly or indirectly indicates the exhaust emission behaviour or exhaust emission characteristic of the vehicle. For example, such information may indicate whether the vehicle fulfils a certain emission standard, such as the commonly known Euro 4 or Euro 5 emission standard available in Europe for gasoline and Diesel engines. As such, potential vehicle emission information may be any type of information, such as information regarding a printed and/or coloured badge or something similar, which indicates whether the vehicle fulfils the Euro 4 emission standard (indicated, e.g., by a green badge printed with a number "4"). In some countries, such as Germany, the driver of a vehicle is requested to attach any such badge in visible manner to the vehicle, so that the emission characteristic of the vehicle may be inspected from the outside of the vehicle.

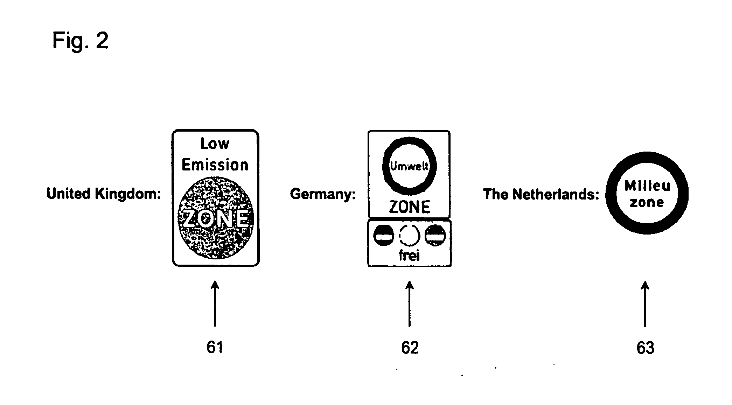

In Fig. 2, various kinds of exemplary information for respective restricted road areas are shown. Typically, such access permission information is placed on a respective traffic sign indicating to the driver that he will be entering a restricted road area. Such restricted road area may be, for example, a so-called "Low Emission Zone (LEZ)", which typically is known as road area or zone in which only vehicles may enter which fulfil a certain emission standard. For example, in a particular LEZ of a city, only vehicles having the Euro 4 standard may enter. Such LEZ may, in principle, be indicated by the information 61 to 63 depicted in Fig. 2 for different countries. Such information, in the first place, indicates that the vehicle will enter a LEZ. In the second place, such information (such as information 62 shown in Fig. 2) may directly or indirectly indicate the vehicle's required emission characteristic to enter the LEZ. For example, information 62 indicates that a vehicle having a red, yellow or green badge, i.e. which fulfils at least the Euro 2 emission standard or higher, may enter the LEZ.

Corresponding information may be stored in the map data storing unit 11 in order to provide the location and area of any LEZ existing in a particular region of interest, and to provide respective access permission information about any LEZ (e.g., information which vehicle emission standard is required for entering the LEZ and other criteria which may be relevant, such as vehicle weight, daytime, season etc.). Such information may be seen as access permission information being indicative of a permission of a vehicle to enter the LEZ.

In establishing LEZs, there may also be several levels of emission standards as indicated with information 62 in Fig. 2, wherein the vehicles have to fulfil at least the lowest standard which is allowed for the vehicle to enter the LEZ. Such information may also be contained in corresponding access permission information assigned to a LEZ and stored in the map data storing unit 11.

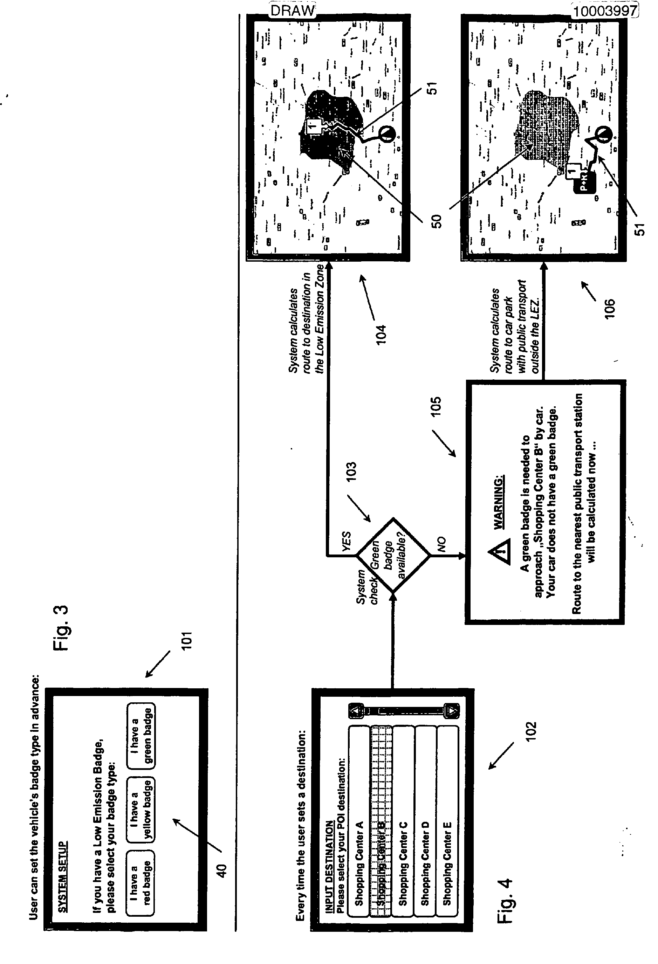

In Fig. 3, there is shown an exemplary implementation of a system setup for storing vehicle emission information in a navigation system. In the present embodiment, as shown in connection with Fig. 1, the route processing unit 21 is coupled with a human machine interface (HMI) 13. The HMI 13 may be any type of human machine interface which is capable of receiving user instructions, such as a touchscreen or input panel. By means of the HMI 13, the route processing unit 21 may receive user instructions for storing vehicle emission information. In the present case, the HMI 13 may display in a step 101 an input menu requesting the user to select from several input options. For example, the requested vehicle emission information may be the information 40 which type of emission badge is assigned to the vehicle. This information is then stored in the storing unit 22 accordingly and may be retrieved from the route processing unit upon request. For example, the driver of a vehicle is requested during a system setup (e.g., when operating the vehicle for the first time after purchase from the manufacturer) to input which type of emission badge (in the present example badge colour) is assigned to the vehicle. Then, the driver inputs, for example, that the vehicle fulfils the emission standard of a green badge which is stored in the storing unit 22.

Fig. 4 depicts an embodiment of a possible process in which the navigation system determines that the destination of a calculated route is within a restricted road area and possible options to handle this event. In step 102, again an input menu may be displayed in which the user may enter a desired destination of a route to be calculated by the route processing unit 21. In the present example, the user selects a shopping center B as the destination. After calculation of the route 51, the route processing unit 21 determines whether the destination is in a restricted road area, such as a LEZ 50 as shown in Fig. 4. If the route processing unit 21 determines that the destination (depicted as "1" in Fig. 4) is in a LEZ 50, it proceeds to step 103 in which it is determined which kind of vehicle emission information is available. To this end, the route processing unit accesses the storing unit 22 for retrieving the respective information 40 as entered in step 101. For example, if it is determined that a green badge is available (indicative, e.g., of the Euro 4 emission standard or higher), then the route processing unit 21 proceeds to step 104 and displays the route 51 to the user. If it is determined that a green badge is not available, then the route processing unit 21 proceeds to step 105 displaying a warning note to the user that the vehicle is not permitted to approach the destination "shopping center B" since the vehicle may not enter the LEZ 50. In this case, access permission information associated with LEZ 50 and stored in the map data storage unit 11 determines that only vehicles with a green badge or higher may enter the LEZ 50. As one possible option, the route processing unit may then proceed to step 106 and calculate a route 51 to a destination which is outside the LEZ 50. For example, it calculates a route 51 to a destination "1" which is a location for changing to public transport for entering the LEZ 50 by public transport. For instance, the location may be a so-called park-and-ride (P +R) area.

The exemplary process as described with reference to Fig. 4 may be implemented with any type of vehicle emission information. For example, step 103 may determine whether a yellow badge or higher is available, or whether a vehicle emission information in accordance with information 61 or 63 (Fig. 2) is available.

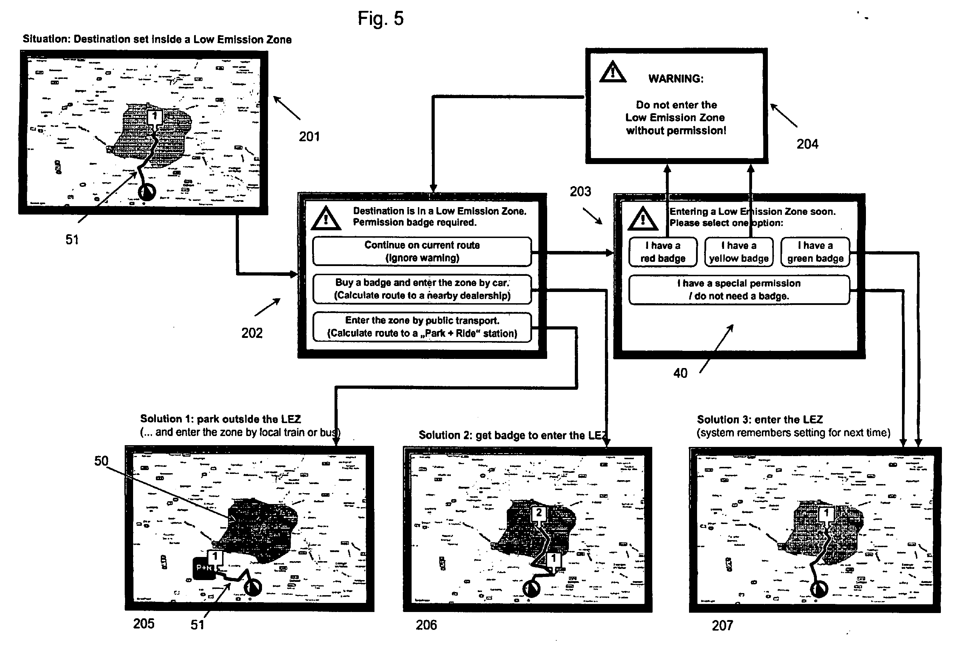

In Fig. 5 there is shown an embodiment of another possible process in which the navigation system determines that the destination of a calculated route is within a restricted road area, and possible options on how to react on such event. In step 201, the route processing unit 21 calculates the route 51 and determines whether the destination "1" is in a restricted road area, such as a LEZ 50. If the route processing unit 21 determines that the destination is in a LEZ 50, it proceeds to step 202 according to which a determination shall be made in the following which kind of vehicle emission information is available. In this example, the system setup as shown in Fig. 3 has not taken place before, so that the vehicle emission information is not yet stored in the storing unit 22.

In step 202, the HMI 13 displays several options on how to proceed. In a fist option, it may be continued to enter the LEZ, so that the process then proceeds to step 203 for entering the vehicle emission information 40. This input menu according to step 203 may be the same or similar to that of Fig. 3. In addition an option may be selected that the vehicle has a special permission to enter the LEZ. After having entered the vehicle emission information 40 (e.g., badge colour), this information or an information indicative thereof may be stored in the storing unit 11. Thus, if the route processing unit 21 again proceeds to step 202 at a later time, the image shown in step 203 may be skipped if the first option in step 202 is selected by the user at a later time again.

If the vehicle emission information entered in step 203 does not comply with the access permission information associated with LEZ 50 (i.e., the vehicle has an emission characteristic which is below the required emission standard for entering the LEZ), the a warning note may be displayed as shown in step 204. The process may then return to step 202.

If it is determined in step 203 that the vehicle may enter the LEZ (for example, if it is determined that a green badge or special permission is available), then the route processing unit 21 proceeds to step 207 and displays the route 51 to the user. If it is determined that a green badge is not available, then the route processing unit 21 proceeds to step 204 displaying a warning note to the user that the vehicle is not permitted to approach the destination since the vehicle may not enter the LEZ 50. In this case, access permission information associated with LEZ 50 and stored in the map data storage unit 11 determines that only vehicles with a green badge or special permission may enter the LEZ 50.

After returning to step 202, as one possible option, the user may then select to enter the LEZ by public transport. Accordingly, the route processing unit may then proceed to step 205 and calculate a route 51 to a destination which is outside the LEZ 50. For example, it calculates a route 51 to a destination "1" which is a location for changing to public transport for entering the LEZ 50 by public transport. For instance, the location may be a park-and-ride (P+R) area. Another option may be that the user may select to be guided to a location "1" for acquiring a permission to enter the LEZ. After having acquired the permission, e.g. an emission badge having the required colour, this information may be entered in the storing unit 11, for instance like in step 203, so that the route processing unit 21 may retrieve this information and may calculate in step 206 the route to the destination "2" located in the LEZ.

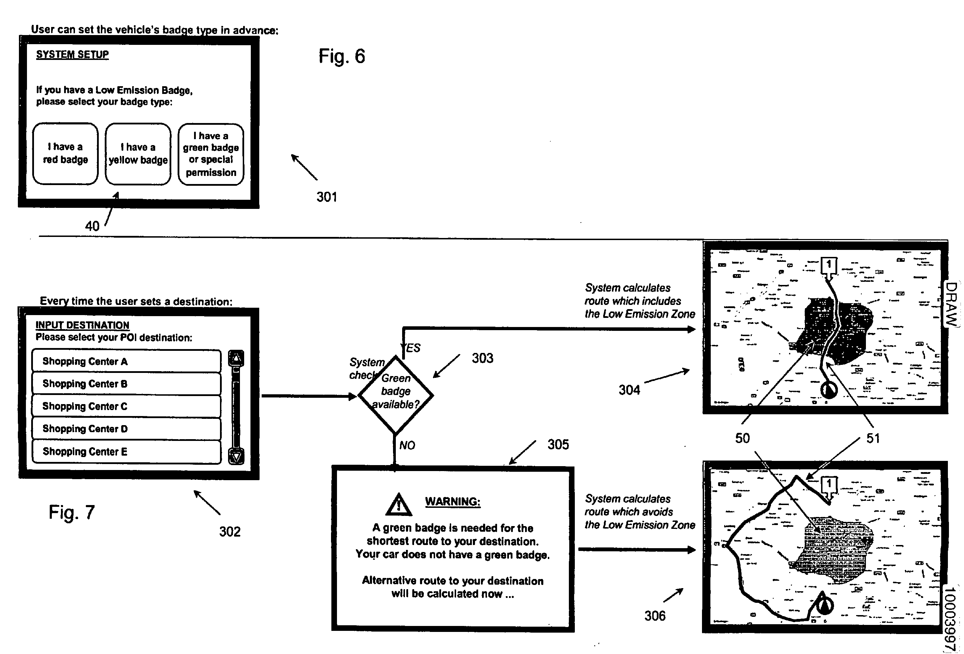

In Fig. 6 there is shown another exemplary implementation of a system setup for storing vehicle emission information in a navigation system. In the embodiment of Fig. 6, the HMI 13 may display in a step 301 an input menu requesting the user to select from several input options which may be similar to that of Fig. 3.

Fig. 7 depicts an embodiment of a possible process in which the navigation system determines that the calculated route goes through a LEZ, and possible option on how to react on any such event. The process steps 302 to 306 are similar to steps 102 to 106 as described with reference to Fig. 4. A difference as compared to the embodiment of Fig. 4 is that the destination of the calculated route is outside the LEZ 50, but the initially calculated route 51 is determined to use roads within the LEZ 50. Thus, in order for the vehicle to use the calculated route, the vehicle must have the permission to enter the LEZ.

In step 302, again an input menu may be displayed in which the user may enter a desired destination of a route to be calculated by the route processing unit 21. In the present example, the user selects a shopping center B as the destination. After calculation of the route 51, the route processing unit 21 determines whether the route uses roads within a restricted road area, such as a LEZ 50 as shown in Fig. 7. If the route processing unit 21 determines that the route goes through a LEZ 50, it proceeds to step 303 in which it is determined which kind of vehicle emission information is available. To this end, the route processing unit accesses the storing unit 22 for retrieving the respective information 40 as entered in step 301. For example, if it is determined that a green badge is available, then the route processing unit 21 proceeds to step 304 and displays the route 51 to the user. If it is determined that a green badge is not available, then the route processing unit 21 proceeds to step 305 displaying a warning note to the user that the vehicle is not permitted to use the calculated route since the vehicle may not enter the LEZ 50. As one possible option, the route processing unit may then proceed to step 306 and calculate a route 51 to a destination "1" without using roads within the LEZ 50.

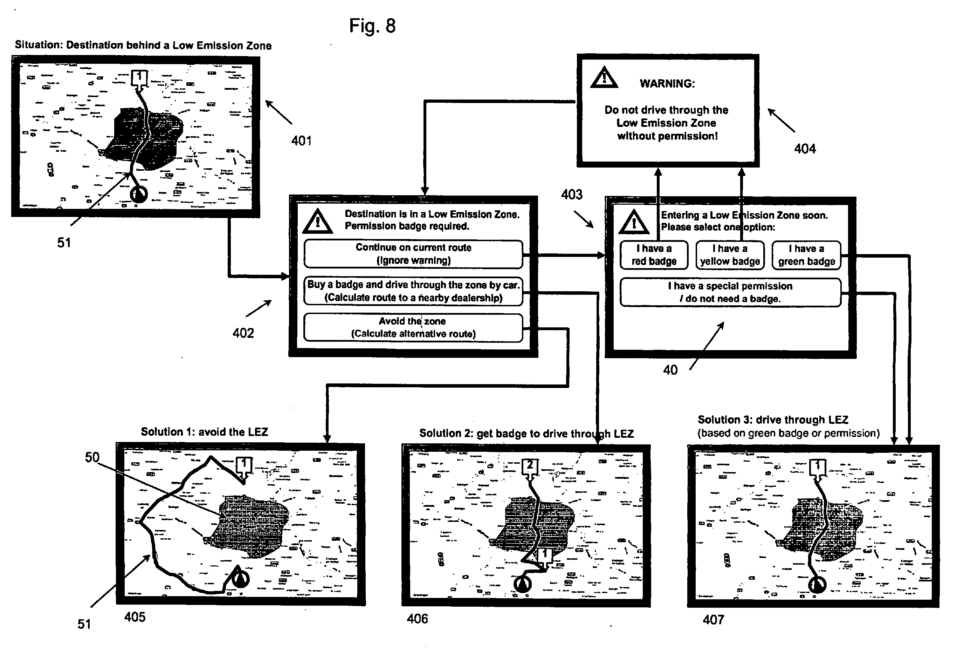

Fig. 8 depicts an embodiment of another possible process in which the navigation system determines that the calculated route goes through a restricted road area, and presents possible options on how to react on any such event. The process steps 401 to 407 are similar to steps 201 to 207 as described with reference to Fig. 5. A difference as compared to the embodiment of Fig. 5 is again that the destination of the calculated route is outside the LEZ 50, but the initially calculated route 51 is determined to use roads within the LEZ 50.

In step 401, the route processing unit 21 calculates the route 51 and determines whether the route 51 uses roads within a restricted road area, such as a LEZ 50. If the route processing unit 21 determines that the route 51 goes through LEZ 50, it proceeds to step 402 according to which a determination shall be made in the following which kind of vehicle emission information is available, comparable to that of Fig. 5.

In step 402, the HMI 13 displays several options on how to proceed. In a fist option, it may be continued to go through the LEZ, so that the process then proceeds to step 403 for entering the vehicle emission information 40. After having entered the vehicle emission information 40 (e.g., badge colour), this information or an information indicative thereof may be stored in the storing unit 11. Thus, if the route processing unit 21 again proceeds to step 402 at a later time, the image shown in step 403 may be skipped if the first option in step 402 is selected by the user at a later time again.

If the vehicle emission information entered in step 403 does not comply with the access permission information associated with LEZ 50, then a warning note may be displayed as shown in step 404. The process may then return to step 402.

If it is determined in step 403 that the vehicle may enter the LEZ (for example, if it is determined that a green badge or special permission is available), then the route processing unit 21 proceeds to step 407 and displays the route 51 going through LEZ 50 to the user. If it is determined that a green badge is not available, then the route processing unit 21 proceeds to step 404 displaying a warning note to the user like in Fig. 5. After returning to step 402, as one possible option, the user may then select to calculate a route 51 not using roads within the LEZ 50. Accordingly, the route processing unit may then proceed to step 405 and calculate a route 51 to the destination which is outside the LEZ 50. Another option may be that the user may select to be guided to a location "1" for acquiring a permission to enter the LEZ. After having acquired the permission, e.g. an emission badge having the required colour, this information may be entered in the storing unit 11, for instance like in step 403, so that the route processing unit 21 may retrieve this information and may calculate in step 406 the route to the destination "2" going through the LEZ.

According to an embodiment, the navigation system 1 according to Fig. 1 further comprises a receiving unit 16. The receiving unit 16 may be coupled with the route processing unit 21 directly or via the storing unit 22 for receiving an external signal 17, e.g. from an external server remote from the vehicle for acquiring access permission information about one or more LEZs 50. Such external server may provide the necessary information regarding location of any LEZs (for example, may provide the location of any new LEZs) and the associated access permission information. In this way, current or updated information on restricted road areas and/or access permission information indicative about current criteria of permission of a vehicle to enter a restricted road area may be received via the receiving unit 16 and stored in the storing unit 22. In this way, the system may be updated in case that the emission standard for a particular LEZ is raised. For example, the receiving unit 16 supplies the external signal 17 and its contents to the route processing unit 21 for updating the route processing unit for route calculation depending on the acquired information.

In another embodiment of the invention, the storing unit 22 is coupled with the receiving unit 16 for acquiring vehicle emission information contained in an external signal 17 transmitted, e.g., from a server remote from the vehicle, like a server of a vehicle manufacturer or vendor. In this way, should any emission standards change or any other new information be required with respect to the permission to enter a respective LEZ, such information can be provided through acquiring the appropriate information through the receiving unit 16 from an external server. Such updating can be useful especially with respect to older vehicles.

In the storing unit 22, further parameters may be stored such as the weight of the vehicle. This may be relevant with respect to LEZ which require a particular low emission standard only for vehicles above a certain weight, for example a weight above 3.5 t. In other words, only in case that the weight is above a certain threshold, then the vehicle emission information is analyzed for calculating the route as described above.

While the invention has been described with reference to exemplary embodiments, it will be understood by those skilled in the art that various changes may be made and equivalence may be substituted for elements or features thereof without departing from the scope of the claims. Therefore, it is intended that the invention not be limited to the particular embodiments disclosed, but that the invention will include all embodiments falling within the scope of the appended claims.

## Claims

1. A navigation system (1) adapted to be installed in a vehicle and including route guidance function, comprising
- a storing unit (22) for storing vehicle emission information (40) which is indicative of an emission characteristic of the vehicle,
- a route processing unit (21) adapted for calculating a route (51) to a destination, wherein the route processing unit (21) is adapted for processing the vehicle emission information (40) and for calculating a route (51) to a destination depending on the vehicle emission information, **characterised in that**
the route processing unit (21) is coupled with a human machine interface (13) which displays several options on how to proceed in case the route processing unit (21) has determined that the route (51) enters a restricted road area (50) which a vehicle may enter only depending on its vehicle emission information (40),
- wherein in a first of the several options, the human machine interface (13) is arranged to provide an option for receiving user instructions to continue to enter the restricted road area, wherein in this case the route processing unit (21) is adapted to request user instructions for storing the vehicle emission information (40) if the vehicle emission information (40) is not yet stored in the storing unit (22),
- wherein in a second of the several options, the human machine interface (13) is arranged to provide an option for receiving user instructions for selecting to be guided to a location for changing to public transport or taxi for entering the restricted road area (50) by public transport or taxi,
- wherein in a third of the several options, the human machine interface (13) is arranged to provide an option for receiving user instructions for selecting to be guided to a location for acquiring a permission to enter the restricted road area (50).

2. The navigation system of claim 1, further comprising
a map data storing unit (11) coupled to the route processing unit (21), the map data storing unit (11) providing access permission information about at least one specific road area (50), the access permission information being indicative of a permission of a vehicle to enter the at least one specific road area (50) depending on its emission characteristic.

3. The navigation system of claim 1 or 2, wherein
the route processing unit (21) is adapted to process access permission information about a specific road area (50) with the vehicle emission information (40) for calculating the route (51) to the destination, and if it is determined that the vehicle is not permitted to enter the specific road area (50), the route processing unit (21) changes the route calculating process.

4. The navigation system of claim 3, wherein
if it is determined that the vehicle is not permitted to enter the specific road area (50), the route processing unit (21) is adapted to calculate a route (51) to a destination which is outside the specific road area (50), or is adapted to calculate a route (51) to a destination without using roads within the specific road area (50).

5. The navigation system of claim 4, wherein
the route processing unit (21) is adapted to calculate a route (51) to a destination which is a location for changing to public transport or taxi for entering the specific road area by public transport or taxi, or a location for acquiring a permission to enter the specific road area.

6. The navigation system of one of claims 1 to 5, wherein
the vehicle emission information (40) stored in the storing unit (22) comprises information regarding an emission badge or an emission class assigned to the vehicle.

7. The navigation system of one of claims 1 to 6, wherein
the vehicle emission information (40) stored in the storing unit (22) comprises information regarding one of different types of emission badges, the different types of emission badges being indicative of different levels of emission characteristics of vehicles.

8. The navigation system of one of claims 1 to 7, wherein
the human machine interface (13) is adapted for receiving user instructions for storing the vehicle emission information (40) input by the user during a system setup.

9. The navigation system of one of claims 1 to 8, further comprising
a receiving unit (16) coupled with the route processing unit (21) for acquiring access permission information about at least one restricted road area (50) from a server remote from the vehicle, the access permission information being indicative about criteria of permission of a vehicle to enter the at least one restricted road area (50) depending on its vehicle emission information (40).

10. The navigation system of claim 9, wherein
the receiving unit (16) is coupled with the route processing unit (21) for updating the route processing unit for route calculation depending on the acquired access permission information.

11. The navigation system of one of claims 1 to 10, wherein
the storing unit (22) is coupled with a receiving unit (16) for acquiring vehicle emission information (40) from a server remote from the vehicle, particularly from a server of a vehicle manufacturer or vendor.

12. A method of route searching in a navigation system which is adapted to be installed in a vehicle, the method comprising the following steps:
- storing vehicle emission information (40) which is indicative of an emission characteristic of the vehicle,
- processing the vehicle emission information (40) and calculating a route (51) to a destination depending on the vehicle emission information, **characterised by**
- displaying several options on how to proceed in caste the route (51) enters a restricted road area (50) which a vehicle may enter only depending on its vehicle emission information (40),
- wherein in a first of the several options, providing an option for receiving user instructions to continue to enter the restricted road area, wherein in this case user instructions for storing the vehicle emission information (40) are requested if the vehicle emission information (40) has not yet been stored,
- wherein in a second of the several options, providing an option for receiving user instructions for selecting to be guided to a location for changing to public transport or taxi for entering the restricted road area (50) by public transport or taxi,
- wherein in a third of the several options, providing an option for receiving user instructions for selecting to be guided to a location for acquiring a permission to enter the restricted road area (50).

## Patentansprüche

1. Navigationssystem (1), das geeignet ist, in einem Fahrzeug installiert zu werden, und welches Routenführungsfunktion beinhaltet, aufweisend
- eine Speichereinheit (22) zur Speicherung von Fahrzeugemissionsinformation (40), welche für eine Emissionscharakteristik des Fahrzeugs bezeichnend ist,
- eine Routenverarbeitungseinheit (21) geeignet für das Berechnen einer Route (51) zu einem Ziel, wobei die Routenverarbeitungseinheit (21) geeignet ist, die Fahrzeugemissionsinformation (40) zu verarbeiten und eine Route (51) zu einem Ziel abhängig von der Fahrzeugemissionsinformation zu berechnen, **dadurch gekennzeichnet, dass**
die Routenverarbeitungseinheit (21) mit einer Mensch-Maschine-Schnittstelle (13) gekoppelt ist, welche mehrere Optionen darstellt, wie weiter zu verfahren ist in dem Fall, dass die Routenverarbeitungseinheit (21) festgestellt hat, dass die Route (51) in einen beschränkten Straßenbereich (50) eintritt, in welchen ein Fahrzeug nur abhängig von seiner Fahrzeugemissionsinformation (40) eintreten darf,
- wobei in einer ersten der mehreren Optionen die Mensch-Maschine-Schnittstelle (13) eingerichtet ist, eine Option für das Empfangen von Benutzerinstruktionen bereitzustellen, mit dem Eintreten in den beschränkten Straßenbereich fortzufahren, wobei in diesem Fall die Routenverarbeitungseinheit (21) geeignet ist, Benutzerinstruktionen für ein Speichern der Fahrzeugemissionsinformation (40) anzufordern, falls die Fahrzeugemissionsinformation (40) noch nicht in der Speichereinheit (22) gespeichert ist,
- wobei in einer zweiten der mehreren Optionen die Mensch-Maschine-Schnittstelle (13) eingerichtet ist, eine Option für das Empfangen von Benutzerinstruktionen bereitzustellen, um auszuwählen, zu einem Ort geführt zu werden, um auf öffentlichen Transport oder Taxi zu wechseln, um in den beschränkten Straßenbereich (50) durch öffentlichen Transport oder Taxi einzutreten,
- wobei in einer dritten der mehreren Optionen die Mensch-Maschine-Schnittstelle (13) eingerichtet ist, eine Option für das Empfangen von Benutzerinstruktionen bereitzustellen, um auszuwählen, zu einem Ort geführt zu werden, um eine Erlaubnis für das Eintreten in den beschränkten Straßenbereich (50) zu erlangen.

2. Navigationssystem nach Anspruch 1, weiterhin aufweisend eine Kartendatenspeicherungseinheit (11), die mit der Routenverarbeitungseinheit (21) gekoppelt ist, wobei die Kartendatenspeicherungseinheit (11) Zugangserlaubnisinformation über wenigstens einen spezifischen Straßenbereich (50) bereitstellt, wobei die Zugangserlaubnisinformation für eine Berechtigung eines Fahrzeugs bezeichnend ist, in den wenigstens einen spezifischen Straßenbereich (50) abhängig von seiner Emissionscharakteristik einzutreten.

3. Navigationssystem nach Anspruch 1 oder 2, wobei die Routenverarbeitungseinheit (21) geeignet ist, Zugangserlaubnisinformation über einen spezifischen Straßenbereich (50) mit der Fahrzeugemissionsinformation (40) zu verarbeiten, um die Route (51) zu dem Ziel zu berechnen, und falls festgestellt wird, dass das Fahrzeug nicht berechtigt ist, in den spezifischen Straßenbereich (50) einzutreten, die Routenverarbeitungseinheit (21) den Routenberechnungsprozess verändert.

4. Navigationssystem nach Anspruch 3, wobei falls festgestellt wird, dass das Fahrzeug nicht berechtigt ist, in den spezifischen Straßenbereich (50) einzutreten, die Routenverarbeitungseinheit (21) geeignet ist, eine Route (51) zu einem Ziel zu berechnen, welches sich außerhalb des spezifischen Straßenbereichs (50) befindet, oder geeignet ist, eine Route (51) zu einem Ziel zu berechnen, ohne Straßen innerhalb des spezifischen Straßenbereichs (50) zu benutzen.

5. Navigationssystem nach Anspruch 4, wobei die Routenverarbeitungseinheit (21) geeignet ist, eine Route (51) zu einem Ziel zu berechnen, welches ein Ort ist, um auf öffentlichen Transport oder Taxi zu wechseln, um in den spezifischen Straßenbereich mittels öffentlichem Transport oder Taxi einzutreten, oder ein Ort für das Erlangen einer Berechtigung ist, in den spezifischen Straßenbereich einzutreten.

6. Navigationssystem nach einem der Ansprüche 1 bis 5, wobei die Fahrzeugemissionsinformation (40), die in der Speichereinheit (22) gespeichert ist, Information betreffend eine Emissionsplakette oder eine Emissionsklasse, die dem Fahrzeug zugeordnet ist, aufweist.

7. Navigationssystem nach einem der Ansprüche 1 bis 6, wobei die Fahrzeugemissionsinformation (40), die in der Speichereinheit (22) gespeichert ist, Information betreffend eine von verschiedenen Typen von Emissionsplaketten aufweist, wobei die verschiedenen Typen von Emissionsplaketten für verschiedene Niveaus von Emissionscharakteristiken von Fahrzeugen bezeichnend sind.

8. Navigationssystem nach einem der Ansprüche 1 bis 7, wobei die Mensch-Maschine-Schnittstelle (13) geeignet ist, Benutzerinstruktionen für das Speichern der Fahrzeugemissionsinformation (40), die von dem Benutzer während einer Systemeinrichtung eingegeben wird, zu empfangen.

9. Navigationssystem nach einem der Ansprüche 1 bis 8, weiterhin aufweisend eine Empfangseinheit (16), die mit der Routenverarbeitungseinheit (21) für das Erlangen von Zugangserlaubnisinformation über wenigstens einen beschränkten Straßenbereich (50) von einem Server, der sich entfernt von dem Fahrzeug befindet, gekoppelt ist, wobei die Zugangserlaubnisinformation über Berechtigungskriterien eines Fahrzeugs, in den wenigstens einen beschränkten Straßenbereich (50) abhängig von seiner Fahrzeugemissionsinformation (40) einzutreten, bezeichnend ist.

10. Navigationssystem nach Anspruch 9, wobei die Empfangseinheit (16) mit der Routenverarbeitungseinheit (21) für eine Aktualisierung der Routenverarbeitungseinheit (21) für eine Routenberechnung abhängig von der erhaltenen Zugangserlaubnisinformation gekoppelt ist.

11. Navigationssystem nach einem der Ansprüche 1 bis 10, wobei die Speichereinheit (22) mit einer Empfangseinheit (16) gekoppelt ist, um Fahrzeugemissionsinformation (40) von einem Server zu erhalten, der sich entfernt von dem Fahrzeug befindet, insbesondere von einem Server eines Fahrzeugherstellers oder Fahrzeugverkäufers.

12. Verfahren zur Routensuche in einem Navigationssystem, welches geeignet ist, in einem Fahrzeug installiert zu werden, wobei das Verfahren die folgenden Schritte aufweist:
- Speichern von Fahrzeugemissionsinformation (40), welche für eine Emissionscharakteristik des Fahrzeugs bezeichnend ist,
- Verarbeiten der Fahrzeugemissionsinformation (40) und Berechnen einer Route (51) zu einem Ziel abhängig von der Fahrzeugemissionsinformation, **gekennzeichnet durch**,
- Darstellen von mehreren Optionen, wie weiter zu verfahren ist, im Fall, dass die Route (51) in einen beschränkten Straßenbereich (50) eintritt, in welchen ein Fahrzeug nur abhängig von seiner Fahrzeugemissionsinformation (40) eintreten darf,
- wobei in einer ersten der mehreren Optionen eine Option bereitgestellt wird, um Benutzerinstruktionen zu empfangen, mit dem Eintreten in den beschränkten Straßenbereich fortzufahren, wobei in diesem Fall Benutzerinstruktionen für das Speichern der Fahrzeugemissionsinformation (40) angefordert werden, falls die Fahrzeugemissionsinformation (40) noch nicht gespeichert worden ist,
- wobei in einer zweiten der mehreren Optionen eine Option zum Empfang von Benutzerinstruktionen bereitgestellt wird, um auszuwählen, zu einem Ort für ein Wechseln auf öffentlichen Transport oder Taxi geführt zu werden, um in den beschränkten Straßenbereich (50) **durch** öffentlichen Transport oder Taxi einzutreten,
- wobei in einer dritten der mehreren Optionen eine Option für das Empfangen von Benutzerinstruktionen bereitgestellt wird, um auszuwählen, zu einem Ort geführt zu werden, um eine Berechtigung zu erlangen, in den beschränkten Straßenbereich (50) einzutreten.

## Revendications

1. Système de navigation (1) conçu pour être installé dans un véhicule et comprenant une fonction de guidage routier, comprenant :
- une unité de stockage (22) pour stocker des informations d'émission de véhicule (40) qui sont indicatives de caractéristiques d'émission du véhicule,
- une unité de traitement d'itinéraire (21) conçue pour calculer un itinéraire (51) jusqu'à une destination, l'unité de traitement d'itinéraire (21) étant conçue pour traiter les informations d'émission de véhicule (40) et pour calculer un itinéraire (51) jusqu'à une destination selon les informations d'émission de véhicule, **caractérisé en ce que** :
l'unité de traitement d'itinéraire (21) est couplée à une interface homme-machine (13) qui affiche plusieurs options concernant la manière de procéder dans le cas où l'unité de traitement d'itinéraire (21) a déterminé que l'itinéraire (51) pénétrait dans une zone routière à accès limité (50) dans laquelle un véhicule peut pénétrer seulement selon ses informations d'émission de véhicule (40),
- dans lequel dans une première des options, l'interface homme-machine (13) est conçue pour offrir l'option de recevoir des instructions de l'utilisateur pour continuer à pénétrer dans la zone routière à accès limité, auquel cas l'unité de traitement d'itinéraire (21) est conçue pour demander des instructions de l'utilisateur pour stocker les informations d'émission de véhicule (40) si les informations d'émission de véhicule (40) ne sont pas encore stockées dans l'unité de stockage (22),
- dans lequel dans une deuxième des options, l'interface homme-machine (13) est conçue pour offrir l'option de recevoir des instructions de l'utilisateur pour choisir d'être guidé jusqu'à un emplacement permettant d'accéder à des transports en commun ou un taxi pour pénétrer dans la zone routière à accès limité (50) par transports en commun ou taxi,
- dans lequel dans une troisième des options, l'interface homme-machine (13) est conçue pour offrir l'option de recevoir des instructions de l'utilisateur pour choisir d'être guidé jusqu'à un emplacement permettant d'acquérir une autorisation de pénétrer dans la zone routière à accès limité (50).

2. Système de navigation selon la revendication 1, comprenant en outre :
une unité de stockage de données cartographiques (11) couplée à l'unité de traitement d'itinéraire (21), l'unité de stockage de données cartographiques (11) fournissant des informations d'autorisation d'accès concernant au moins une zone routière spécifique (50), les informations d'autorisation d'accès étant indicatives d'une autorisation d'un véhicule à pénétrer dans l'au moins une zone routière spécifique (50) selon ses caractéristiques d'émission.

3. Système de navigation selon la revendication 1 ou 2, dans lequel :
l'unité de traitement d'itinéraire (21) est conçue pour traiter des informations d'autorisation d'accès concernant une zone routière spécifique (50) à l'aide des informations d'émission de véhicule (40) pour calculer l'itinéraire (51) jusqu'à la destination, et s'il est déterminé que le véhicule n'est pas autorisé à pénétrer dans la zone routière spécifique (50), l'unité de traitement d'itinéraire (21) change le processus de calcul d'itinéraire.

4. Système de navigation selon la revendication 3, dans lequel :
s'il est déterminé que le véhicule n'est pas autorisé à pénétrer dans la zone routière spécifique (50), l'unité de traitement d'itinéraire (21) est conçue pour calculer un itinéraire (51) jusqu'à une destination qui se trouve en dehors de la zone routière spécifique (50), ou est conçue pour calculer un itinéraire (51) jusqu'à une destination sans utiliser de route se trouvant à l'intérieur de la zone routière spécifique (50).

5. Système de navigation selon la revendication 4, dans lequel :
l'unité de traitement d'itinéraire (21) est conçue pour calculer un itinéraire (51) jusqu'à une destination qui est un emplacement permettant d'accéder à des transports en commun ou un taxi pour pénétrer dans la zone routière spécifique par transports en commun ou taxi, ou un emplacement permettant d'acquérir une autorisation de pénétrer dans la zone routière spécifique.

6. Système de navigation selon l'une des revendications 1 à 5, dans lequel :
les informations d'émission de véhicule (40) stockées dans l'unité de stockage (22) comprennent des informations concernant une vignette d'émission ou une classe d'émission attribuée au véhicule.

7. Système de navigation selon l'une des revendications 1 à 6, dans lequel :
les informations d'émission de véhicule (40) stockées dans l'unité de stockage (22) comprennent des informations concernant un type de vignette d'émission parmi différents types, les différents types de vignette d'émission étant indicatifs de différents niveaux de caractéristiques d'émission de véhicules.

8. Système de navigation selon l'une des revendications 1 à 7, dans lequel :
l'interface homme-machine (13) est conçue pour recevoir des instructions de l'utilisateur pour stocker les informations d'émission de véhicule (40) saisies par l'utilisateur durant une configuration du système.

9. Système de navigation selon l'une des revendications 1 à 8, comprenant en outre :
une unité de réception (16) couplée à l'unité de traitement d'itinéraire (21) pour acquérir des informations d'autorisation d'accès concernant l'au moins une zone routière à accès limité (50) auprès d'un serveur distant du véhicule, les informations d'autorisation d'accès étant indicatives de critères d'autorisation d'un véhicule à pénétrer dans l'au moins une zone routière à accès limité (50) selon ses informations d'émission de véhicule (40).

10. Système de navigation selon la revendication 9, dans lequel :
l'unité de réception (16) est couplée à l'unité de traitement d'itinéraire (21) pour mettre à jour l'unité de traitement d'itinéraire en vue d'un calcul d'itinéraire selon les informations d'autorisation d'accès acquises.

11. Système de navigation selon l'une des revendications 1 à 10, dans lequel :
l'unité de stockage (22) est couplée à une unité de réception (16) pour acquérir des informations d'émission de véhicule (40) auprès d'un serveur distant du véhicule, en particulier auprès d'un serveur d'un fabricant ou vendeur du véhicule.

12. Procédé de recherche d'itinéraire dans un système de navigation qui est conçu pour être installé dans un véhicule, le procédé comprenant les étapes suivantes :
- stockage d'informations d'émission de véhicule (40) qui sont indicatives de caractéristiques d'émission du véhicule,
- traitement des informations d'émission de véhicule (40) et calcul d'un itinéraire (51) jusqu'à une destination selon les informations d'émission de véhicule, **caractérisé par** :
- l'affichage de plusieurs options concernant la manière de procéder dans le cas où l'itinéraire (51) pénètre dans une zone routière à accès limité (50) dans laquelle un véhicule peut pénétrer seulement selon ses informations d'émission de véhicule (40),
- dans lequel dans une première des options, l'option est offerte de recevoir des instructions de l'utilisateur pour continuer à pénétrer dans la zone routière à accès limité, auquel cas des instructions de l'utilisateur pour stocker les informations d'émission de véhicule (40) sont demandées si les informations d'émission de véhicule (40) n'ont pas encore été stockées,
- dans lequel dans une deuxième des options, l'option est offerte de recevoir des instructions de l'utilisateur pour choisir d'être guidé jusqu'à un emplacement permettant d'accéder à des transports en commun ou un taxi pour pénétrer dans la zone routière à accès limité (50) par transports en commun ou taxi,
- dans lequel dans une troisième des options, l'option est offerte de recevoir des instructions de l'utilisateur pour choisir d'être guidé jusqu'à un emplacement permettant d'acquérir une autorisation de pénétrer dans la zone routière à accès limité (50).
